# EUROPÄISCHE PATENTSCHRIFT

(11) **EP 1 564 321 B1**
(45) Veröffentlichungstag und Bekanntmachung des Hinweises auf die Patenterteilung: **14.11.2007**
(21) Anmeldenummer: 05001943.9
(22) Anmeldetag: 31.01.2005
(51) Int. Cl.: D04H 1/00, D04H 3/00, H01B 3/00

(54) **Kabelschutz**
Protection for cables
Protection pour cables

(30) Priorität: 11.02.2004 DE 102004006761; 24.03.2004 DE 102004014462
(43) Veröffentlichungstag der Anmeldung: 17.08.2005
(73) Patentinhaber: FIBERTEX A/S, 9220 Aalborg Ost (DK)
(72) Erfinder: Mortensen, Mads Hoy, Lisbjerg 8200 Arhus (DK)
(74) Vertreter: Laufhütte, Dieter

(56) Entgegenhaltungen:
- EP-A- 1 217 704
- DD-A5- 281 284
- DE-A1- 10 107 569
- US-A- 4 096 313
- US-A1- 2002 098 311
- PATENT ABSTRACTS OF JAPAN Bd. 014, Nr. 100 (C-0693), 23. Februar 1990 (1990-02-23) & JP 01 306665 A (KUREHA SENI KK), 11. Dezember 1989 (1989-12-11)

## Beschreibung

Die Erfindung betrifft einen Kabelschutz für elektrische Kabel.

Üblicherweise werden elektrische Kabel heutzutage in Gräben verlegt, wobei sie mit Sand in guter und feiner Qualität als Schutz vor Beschädigung durch Steine oder dergleichen eingebettet werden. Sand in guter und feiner Qualität ist ein natürlich vorkommendes Mineral mit einer sehr hohen Wärmeleitfähigkeit. Diese hohe Wärmeleitfähigkeit ist besonders wünschenswert, da ein niedrigeres Temperaturniveau innerhalb des elektrischen Kabels zu einer Minimierung der Leistungsverluste führt. Auch wenn ein aus Sand in guter und feiner Qualität bestehender Kabelschutz für elektrische Kabel die technischen Anforderungen weitgehend gut erfüllt, weist diese Lösung Nachteile auf. So muss der Sand in guter und feiner Qualität von seiner Lagerstätte, wo er gewonnen wird, zum Einsatzort transportiert werden. Sand in guter und feiner Qualität als solcher ist ein natürlich vorkommendes Mineral, dass nur in vergleichsweise wenig Lagerstätten abgebaut wird und daher einen seltenen und teueren Einsatzstoff darstellt.

Aus dem Automobilbereich sind dabei Mehrschicht-Vliesmaterialien bekannt, welche einem mechanischen Schutz von Kabeln dienen. So ist aus DE 101 07 569 A1 ein Mehrschicht-Vliesmaterial bekannt mit einer äußeren Schicht aus einem weniger dichten Vliesmaterial mit einem im wesentlichen vertikalen Faserprofil und einer mit dieser verbundenen inneren Schicht aus Vliesmaterial höherer Dichte mit einem im wesentlichen horizontalen Faserprofil. Dieses auf Abriebfestigkeit optimierte Material ist aber zum Schutz von Erdkabeln mit den dort vollkommen anderen Anforderungen nicht geeignet.

Aufgabe der vorliegenden Erfindung ist es, einen möglichst guten Schutz für verlegte elektrische Kabel gegen Beschädigung von außen bereitzustellen, wobei gleichzeitig die auf Wärmeentwicklung zurückzuführenden Leitungsverluste minimiert werden sollen.

Erfindungsgemäß wird die Aufgabe durch die Merkmalskombination des Anspruchs 1 gelöst. Demnach besteht der erfindungsgemäße Kabelschutz für elektrische Kabel aus einem Mehrschicht-Vliesmaterial mit einer Kernschicht aus einem weniger dichten Vliesmaterial mit hoher mechanischer Festigkeit und zumindest einer diese auf zumindest einer Seite abdeckende Deckschicht aus Vliesmaterial hoher Dichte und hoher Wärmeleitfähigkeit. Dabei weist das die Kernschicht bildende Vliesmaterial eine statische Stichfestigkeit im Bereich zwischen 3000 bis 13000 N oder darüber, vorzugsweise zwischen 7000 - 13000 N gemessen nach EN ISO 12236 auf und das Mehrschichtvliesmaterial eine Wärmeleitfähigkeit im Bereich von 0,05 bis 0,9 W/(m °K) bei ca. 8 °C Umgebungstemperatur.

Der Kabelschutz besteht zunächst aus einem schützenden voluminösen Kernmaterial vergleichsweise geringerer Dichte, das mittels eines thermisch gebundenen Oberflächenlagenmaterials mit sehr hoher Wärmeleitfähigkeit zumindest auf einer Seite ausgebildet ist. Das voluminöse Kernmaterial des Kabelschutzes führt zur mechanischen Festigkeit beispielsweise gegen statisches oder dynamisches Durchstechen, während die hohe Wärmeleitfähigkeit im System durch die zumindest eine außerordentlich dichte Oberflächenlage geschaffen wird, die einen verbesserten Kontakt zwischen dem elektrischen Kabel und/oder dem diese umgebende Material ermöglicht. Das zunächst meist flächig vorliegende Kabelschutzmaterial wird mittels spezieller Vorrichtungen um die elektrischen Kabel herumgewickelt, bevor die Kabel in den entsprechend ausgehobenen Gräben abgelegt werden.

Besonders vorteilhafte Ausgestaltungen der Erfindung ergeben sich aus den sich an den Hauptanspruch anschließenden Unteransprüchen. Somit kann zunächst die Kernschicht auf beiden Seiten mit Deckschichten aus Vliesmaterial hoher Dichte und hoher Wärmeleitfähigkeit abgedeckt sein.

Das Material kann ein Nadelfilzmaterial sein, das komprimiert sein kann. Auch andere Typen von Vliesmaterialien können eingesetzt werden, wie beispielsweise "Air laid"-Materialien oder andere Typen.

Das die Kernschicht bildende Vliesmaterial kann eine statische Stichfestigkeit im Bereich zwischen 3000 bis 13000 N oder mehr, vorzugsweise 7000 bis 13000 N, gemessen nach EN ISO 12236 aufweisen. Weiterhin weist das die Kernschicht bildende Vliesmaterial vorteilhaft eine Stichfestigkeit im Bereich zwischen 0 bis 16 mm, vorzugsweise zwischen 0 und 5 mm, gemessen nach EN 918 auf.

Das Gewicht liegt vorzugsweise im Bereich von 300 - 2000 g/m², vorzugsweise im Bereich von 700 - 1200 g/m².

Hierdurch wird gewährleistet, dass die in den Gräben verlegten elektrischen Kabel einen guten Schutz gegen mechanische Beschädigung aufweisen. Eine mechanische Beschädigung, insbesondere ein Durchstechen der Kabel kann einerseits durch plötzliche dynamische Kräfte, wie beispielsweise durch Druck eines über den Graben fahrenden Fahrzeugs, oder aber auch durch statischen Druck, der sich über lange Zeiträume aufbaut, beispielsweise durch Erdbewegungen beim Übergang der Jahreszeiten, beispielsweise vom Sommer auf den Winter, entstehen. Mittels des erfindungsgemäßen Kabelschutzes können möglicherweise auftretende Spannungen absorbiert werden, so dass eine Beschädigung der Kabel wirksam verhindert werden kann.

Gemäß einer weiteren vorteilhaften Ausgestaltung der Erfindung weist das die Kernschicht bildende Vliesmaterial eine mittlere Porengröße von 3 bis 300 µm, vorzugsweise von 15 bis 55 µm auf, gemessen mit einem PMI Porosimeter pro Meter unter Verwendung von Galwick als Medium.

Das Mehrschicht-Vliesmaterial weist vorteilhaft eine Zugfestigkeit im Bereich von 30 bis 50 kN/m, besonders vorzugsweise 35 bis 45 kN/m, in Maschinenrichtung und eine Zugfestigkeit im Bereich von 70 bis 110 kN/m, besonders bevorzugt eine Zugfestigkeit im Bereich von 80 bis 100 kN/m, quer zur Maschinenrichtung gemessen nach EN ISO 10319 auf.

Vorteilhaft weist das Mehrschicht-Vliesmaterial des Kabelschutzes nach der vorliegenden Erfindung eine Dehnbarkeit im Bereich von 70 bis 110 %, besonders vorteilhaft 80 bis 100 %, in Maschinenrichtung und eine Dehnbarkeit von 40 bis 80 %, besonders vorteilhaft von 50 bis 70 %, quer zur Maschinenrichtung gemessen nach EN ISO 10319 auf.

Das Mehrschicht-Vliesmaterial weist eine Wärmeleitfähigkeit im Bereich von 0,05 bis 0,9 W/(m °K) bei ca. 8° C Umgebungstemperatur auf. Besonders vorteilhaft weist das Mehrschicht-Vliesmaterial eine Wärmeleitfähigkeit im Bereich über 0,7 W/(m °K) bei ca. 8° C Umgebungstemperatur auf. Aufgrund dieser hohen Wärmeleitfähigkeit kann die im Kabel auftretende Wärme schnell abtransportiert werden.

Anhand der einzigen in Anlage beigefügten Figur wird eine besonders vorteilhafte Ausführungsform des erfindungsgemäßen Kabelschutzes beschrieben.

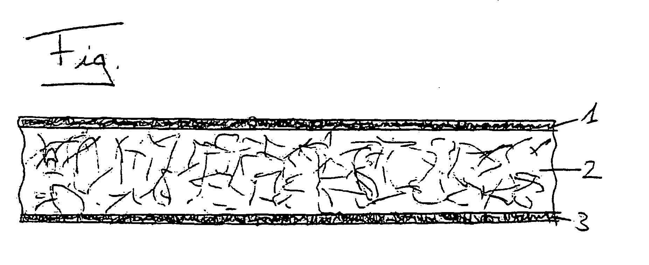

Die einzige Figur zeigt einen Schnitt durch einen dreilagigen Kabelschutz. Dieser besteht zunächst aus einer Kernschicht, die ein voluminöses Material darstellt, das heißt ein Vliesmaterial mit vergleichsweise geringer Dichte. Diese Schicht aus voluminösem Vliesmaterial ist mittels der Schichten 1 und 3 aus einem thermischgebundenen sehr dichten Oberflächen-Vliesmaterial umhüllt, wobei dieses thermisch gebundene Deckvlies jeweils eine hohe Wärmeleitfähigkeit aufweist. Während das Kernmaterial 2 des Mehrschicht-Vliesmaterials für eine gute mechanische Festigkeit beispielsweise gegen statisches oder dynamisches Durchstechen, sicherstellt. Der zur Minimierung des Leistungsverlustes der elektrischen Kabel notwendige hohe Wärmeleitfähigkeitswert des Kabelschutzes wird durch die einzigartig dichte Oberflächenschicht des thermisch gebundenen Deckvliesmaterials 1 und 3 ermöglicht, wobei die besonders gute Wärmeleitfähigkeit insbesondere auch auf einen besseren Kontakt zwischen dem elektrischen Kabel und/oder dem umgebenden Material zurückgeht.

Das die Kernschicht bildende Vliesmaterial weist eine statische Stichfestigkeit im Bereich zwischen 7000 bis 13000 N vorzugsweise 9000 bis 12000 N gemessen nach EN ISO 12236 auf. Die dynamische Stichfestigkeit dieses Materials reicht von 0 bis 5 mm, vorzugsweise 0 bis 3 mm (gemessen nach EN 918).

Die mittlere Porengröße des Materials reicht von 3 bis 300 µm, vorzugsweise von 15 bis 55 µm, wobei die mittlere Porengröße mittels eines PMI Porosimeters mit Galwick als Medium gemessen wird.

Die Zugfestigkeit variiert zwischen 30 und 50 kN/m, vorzugsweise 35 bis 45 kN/m, in Maschinenrichtung und von 70 bis 110 kN/m, vorzugsweise 80 bis 100 kN/m, in der Querrichtung (gemessen nach EN ISO 10319). Die Wärmeleitfähigkeit reicht von 0,05 bis 0,9 W/(m °K) bei einer Temperatur von -8° C, vorzugsweise über 0,7 W/(m °K).

Folgende Wärmeübergangswerte wurden beim erfindungsgemäßen Material gemessen:

| **Produkt** | **ca. 8° C** | **ca. 70° C** | **ca. 90°C** |
|---|---|---|---|
| | | | |
| Standard Vlies, trocken | 0,059 W/(m °K) | 0,068 W/(m °K) | 0,070 W/(m °K) |
| Standard Vlies, feucht | 0,809 W/(m °K) | 0,834 W/(m °K) | 0,850 W/(m °K) |
| Optimiertes Vlies, trocken | 0,073 W/(m °K) | 0,088 W/(m °K) | 0,091 W/(m °K) |
| Optimiertes Vlies, feucht | 0,685 W/(m °K) | 0,722 W/(m °K) | 0,750 W/(m °K) |

Das Mehrschicht-Vliesmaterial wird mittels hier nicht näher dargestellter Wickelmaschinen um die elektrischen Kabel gewickelt, bevor diese in entsprechend ausgehobene Gräben gelegt werden.

Von der Erfindung umfasst sind auch Ausführungsformen, deren Vliesmaterial hinsichtlich seiner Parameterwerte nur unwesentlich von den angegebenen Werten abweicht bzw. nur geringfügig außerhalb der genannten Bereichsgrenzen liegt.

## Patentansprüche

1. Kabelschutz für elektrische Kabel bestehend aus einem Mehrschicht-Vliesmaterial mit einer Kernschicht aus einem weniger dichten Vliesmaterial mit hoher mechanischer Festigkeit und zumindest einer diese auf zumindest einer Seite abdeckenden Deckschicht aus Vliesmaterial hoher Dichte und hoher Wärmeleitfähigkeit, wobei
das die Kernschicht bildende Vliesmaterial eine statische Stichfestigkeit im Bereich zwischen 3000 bis 13000 N oder darüber, vorzugsweise zwischen 7000 - 13000 N gemessen nach EN ISO 12236 aufweist und
das Mehrschichtvliesmaterial eine Wärmeleitfähigkeit im Bereich von 0,05 bis 0,9 W/(m °K) bei ca. 8 °C Umgebungstemperatur aufweist.

2. Kabelschutz nach Anspruch 1, **dadurch gekennzeichnet, dass** die Kernschicht auf beiden Seiten mit Deckschichten aus Vliesmaterial hoher Dichte und hoher Wärmeleitfähigkeit abgedeckt ist.

3. Kabelschutz nach Anspruch 1, **dadurch gekennzeichnet, dass** das die Kernschicht bildende Vliesmaterial eine statische Stichfestigkeit im Bereich zwischen 9000 bis 12000 N gemessen nach EN ISO 12236 aufweist.

4. Kabelschutz nach einem der Ansprüche 1 bis 3, **dadurch gekennzeichnet, dass** das die Kernschicht bildende Vliesmaterial eine Stichfestigkeit im Bereich zwischen 0 bis 16 mm vorzugsweise im Bereich zwischen 0 - 5 mm gemessen nach EN 918 aufweist.

5. Kabelschutz nach Anspruch 4, **dadurch gekennzeichnet, dass** das die Kernschicht bildende Vliesmaterial eine Stichfestigkeit im Bereich zwischen 0 und 3 mm gemessen nach EN 918 aufweist.

6. Kabelschutz nach einem der Ansprüche 1 bis 5, **dadurch gekennzeichnet, dass** das die Kernschicht bildende Vliesmaterial eine mittlere Porengrößen von 3 bis 300 µm, gemessen mit einem PMI Porometer unter Verwendung von Galwick als Medium, aufweist.

7. Kabelschutz nach Anspruch 6, **dadurch gekennzeichnet, dass** das die Kernschicht bildende Vliesmaterial eine mittlere Porengrößen von 15 bis 55 µm, gemessen mit einem PMI Porometer unter Verwendung von Galwick als Medium, aufweist.

8. Kabelschutz nach einem der Ansprüche 1 bis 7, **dadurch gekennzeichnet, dass** das Mehrschichtvliesmaterial eine Zugfestigkeit im Bereich von 30 bis 50 kN/m in Maschinenrichtung und eine Zugfestigkeit von 70 bis 110 kN/m quer zur Maschinenrichtung gemessen nach EN ISO 10319 aufweist.

9. Kabelschutz nach Anspruch 8, **dadurch gekennzeichnet, dass** das Mehrschichtvüesmaterial eine Zugfestigkeit im Bereich von 35 bis 45 kN/m in Maschinenrichtung und eine Zugfestigkeit von 80 bis 100 kN/m quer zur Maschinenrichtung gemessen nach EN ISO 10319 aufweist.

10. Kabelschutz nach einem der Ansprüche 1 bis 9, **dadurch gekennzeichnet, dass** das Mehrschichtvliesmaterial eine Dehnbarkeit im Bereich von 70 bis 110 % in Maschinenrichtung und eine Dehnbarkeit von 40 bis 80 % quer zur Maschinenrichtung gemessen nach EN ISO 10319 aufweist.

11. Kabelschutz nach Anspruch 10, **dadurch gekennzeichnet, dass** das Mehrschichtvliesmaterial eine Dehnbarkeit im Bereich von 80 bis 100 % in Maschinenrichtung und eine Dehnbarkeit von 50 bis 70 % quer zur Maschinenrichtung gemessen nach EN ISO 10319 aufweist.

12. Kabelschutz nach einem der Ansprüche 1 bis 11, **dadurch gekennzeichnet, dass** das Mehrschichtvliesmaterial eine Wärmeleitfähigkeit im Bereich über 0,7 W/(m °K) bei ca. 8 °C Umgebungstemperatur aufweist.

13. Kabelschutz nach einem der vorhergehenden Ansprüche, **dadurch gekennzeichnet, dass** das Gewicht des Mehrschichtsvliesmaterials im Bereich zwischen 300 - 2000 g/m² und vorzugsweise im Bereich zwischen 700 - 1200 g/m² liegt.

## Claims

1. Cable protection for electrical cables comprising a multilayer nonwoven material having a core layer composed of a less-dense nonwoven material with high mechanical strength and at least one cover layer, which covers this core layer on at least one side and is composed of nonwoven material of high density and with a high thermal conductivity, with
the nonwoven material which forms the core layer having a static puncture resistance in the range between 3000 and 13 000 N or more, preferably between 7000 and 13 000 N measured in accordance with EN ISO 12236 and the multilayer nonwoven material having a thermal conductivity in the range from 0.05 to 0. 9 W/ (m °K) at an ambient temperature of about 8°C.

2. Cable protection according to Claim 1, **characterized in that** the core layer is covered on both sides by cover layers composed of nonwoven material of high density and with a high thermal conductivity.

3. Cable protection according to Claim 1, **characterized in that** the nonwoven material which forms the core layer has a static puncture resistance in the range between 9000 and 12 000 N, measured in accordance with EN ISO 12236.

4. Cable protection according to one of Claims 1 to 3, **characterized in that** the nonwoven material which forms the core layer has a puncture resistance in the range between 0 and 16 mm, preferably in the range between 0 and 5 mm, measured in accordance with EN 918.

5. Cable protection according to Claim 4, **characterized in that** the nonwoven material which forms the core layer has a puncture resistance in the range between 0 and 3 mm, measured in accordance with EN 918.

6. Cable protection according to one of Claims 1 to 5, **characterized in that** the nonwoven material which forms the core layer has a mean pore size of 3 to 300 µm, measured using a PMI porometer, using Galwick as the medium.

7. Cable protection according to Claim 6, **characterized in that** the nonwoven material which forms the core layer has a mean pore size of 15 to 55 µm, measured using a PMI porometer, using Galwick as the medium.

8. Cable protection according to one of Claims 1 to 7, **characterized in that** the multilayer nonwoven material has a tensile strength in the range from 30 to 50 kN/m in the machine direction and a tensile strength of 70 to 110 kN/m transversely with respect to the machine direction, measured in accordance with EN ISO 10319.

9. Cable protection according to Claim 8, **characterized in that** the multilayer nonwoven material has a tensile strength in the range from 35 to 45 kN/m in the machine direction, and a tensile strength of 80 to 100 kN/m transversely with respect to the machine direction, measured in accordance with EN ISO 10319.

10. Cable protection according to one of Claims 1 to 9, **characterized in that** the multilayer nonwoven material has a ductility in the range from 70 to 110% in the machine direction, and a ductility of 40 to 80% transversely with respect to the machine direction, measured in accordance with EN ISO 10319.

11. Cable protection according to Claim 10, **characterized in that** the multilayer nonwoven material has a ductility in the range from 80 to 100% in the machine direction, and a ductility of 50 to 70% transversely with respect to the machine direction, measured in accordance with EN ISO 10319.

12. Cable protection according to one of Claims 1 to 11, **characterized in that** the multilayer nonwoven material has a thermal conductivity in the range above 0.7 W/(m °K) at an ambient temperature of about 8°C.

13. Cable protection according to one of the preceding claims, **characterized in that** the weight of the multilayer nonwoven material is in the range between 300 and 2000 g/m², and is preferably in the range between 700 and 1200 g/m².

## Revendications

1. Protection pour câbles électriques constituée d'un matériau nappé à plusieurs couches comprenant une couche centrale réalisée dans un matériau nappé moins dense à résistance mécanique élevée et au moins une couche de recouvrement la recouvrant sur au moins un côté réalisée dans un matériau nappé de densité élevée et de conductibilité thermique élevée, où:
- le matériau nappé formant la couche centrale présente une consistance statique située dans une marge de 3 000 à 13 000 N ou supérieure, de préférence entre 7 000 et 13 000 N, mesurée selon la norme EN ISO 12236; et
- le matériau nappé à plusieurs couches présente une conductibilité thermique située dans une marge de 0,05 à 0,9 W/(m °K) à une température ambiante d'environ 8 °C.

2. Protection pour câbles selon la revendication 1, **caractérisée en ce que** la couche centrale est recouverte sur les deux côtés de couches de recouvrement réalisées dans un matériau nappé de densité élevée et de conductibilité thermique élevée.

3. Protection pour câbles selon la revendication 1, **caractérisée en ce que** le matériau nappé formant la couche centrale présente une consistance statique située dans une marge de 9 000 à 12 000 N mesurée selon la norme EN ISO 12236.

4. Protection pour câbles selon l'une des revendications 1 à 3, **caractérisée en ce que** le matériau nappé formant la couche centrale présente une consistance située dans une marge de 0 à 16 mm, et de préférence entre 0 et 5 mm, mesurée selon la norme EN 918.

5. Protection pour câbles selon la revendication 4, **caractérisée en ce que** le matériau nappé formant la couche centrale présente une consistance située dans une marge de 0 à 3 mm mesurée selon la norme EN 918.

6. Protection pour câbles selon l'une des revendications 1 à 5, **caractérisée en ce que** le matériau nappé formant la couche centrale présente une grosseur de pore moyenne de 3 à 300 µm mesurée avec un porosimètre PMI par mètre en utilisant le galwick comme substrat.

7. Protection pour câbles selon la revendication 6, **caractérisée en ce que** le matériau nappé formant la couche centrale présente une grosseur de pore moyenne de 15 à 55 µm mesurée avec un porosimètre PMI par mètre en utilisant le galwick comme substrat.

8. Protection pour câbles selon l'une des revendications 1 à 7, **caractérisée en ce que** le matériau nappé à plusieurs couches présente une résistance à la traction située dans une marge de 30 à 50 kN/m dans le sens machine et une résistance à la traction située dans une marge de 70 à 110 kN/m transversalement au sens machine mesurée selon la norme EN ISO 10319.

9. Protection pour câbles selon la revendication 8, **caractérisée en ce que** le matériau nappé à plusieurs couches présente une résistance à la traction située dans une marge de 35 à 45 kN/m dans le sens machine et une résistance à la traction située dans une marge de 80 à 100 kN/m transversalement au sens machine mesurée selon la norme EN ISO 10319.

10. Protection pour câbles selon l'une des revendications 1 à 9, **caractérisée en ce que** le matériau nappé à plusieurs couches présente une élasticité située dans une marge de 70 à 110 % dans le sens machine et une élasticité de 40 à 80 % transversalement au sens machine mesurée selon la norme EN ISO 10319.

11. Protection pour câbles selon la revendication 10, **caractérisée en ce que** le matériau nappé à plusieurs couches présente une élasticité située dans une marge de 80 à 100 % dans le sens machine et une élasticité de 50 à 70 % transversalement au sens machine mesurée selon la norme EN ISO 10319.

12. Protection pour câbles selon l'une des revendications 1 à 11, **caractérisée en ce que** le matériau nappé à plusieurs couches présente une conductibilité thermique supérieure à 0,7 W/(m °K) à une température ambiante d'environ 8 °C.

13. Protection pour câbles selon l'une des revendications précédentes, **caractérisée en ce que** le poids du matériau nappé à plusieurs couches se situe dans une marge de 300 à 2 000 g/m² et de préférence dans une marge de 700 à 1 200 g/m².
